# EUROPÄISCHE PATENTSCHRIFT

(11) **EP 3 829 794 B1**
(45) Veröffentlichungstag und Bekanntmachung des Hinweises auf die Patenterteilung: **24.08.2022**
(21) Anmeldenummer: 19759492.2
(22) Anmeldetag: 25.07.2019
(51) Int. Cl.: B21D 5/02, B21D 55/00, B30B 15/28, F16P 3/14

(54) **BIEGEPRESSE UND VERFAHREN ZUM BETREIBEN EINER BIEGEPRESSE**
BENDING PRESS AND METHOD FOR OPERATING A BENDING PRESS
PRESSE PLIEUSE ET PROCÉDÉ DE FONCTIONNEMENT D'UNE PRESSE PLIEUSE

(30) Priorität: 27.07.2018 AT 506592018
(43) Veröffentlichungstag der Anmeldung: 09.06.2021
(73) Patentinhaber: TRUMPF Maschinen Austria GmbH & Co. KG., 4061 Pasching (AT)
(72) Erfinder: DENKMEIER, Thomas, 4050 Traun (AT); KURZ, Christian, 4020 Linz (AT)
(74) Vertreter: Burger, Hannes
(86) Internationale Anmeldenummer: PCT/AT2019/060245
(87) Internationale Veröffentlichungsnummer: WO 2020/019012

(56) Entgegenhaltungen:
- EP-A1- 1 259 340
- WO-A1-2005/030410
- DE-U1-202010 017 960
- JP-U- H0 726 011

## Beschreibung

Die Erfindung betrifft eine Biegepresse gemäß dem Oberbegriff des Anspruch 1, eine Biegepresse gemäß dem Oberbegriff des Anspruch 2 und ein Verfahren zum Betreiben einer Biegepresse.

Biegepressen werden zunehmend mit Sicherheitseinrichtungen ausgestattet, die unerwünschte Kollisionen eines Biegewerkzeuges mit einem Objekt oder das Einklemmen eines Fingers oder einer Hand einer Bedienperson zwischen Biegewerkzeugen oder zwischen einem Biegewerkzeug und dem zu biegenden Werkstück verhindern sollen. Sicherheitseinrichtungen in Form von Lichtschranken erfordern jeweils seitlich des Pressbalkens Halterungen für Lichtsender und Lichtempfänger, wodurch die Sicherheitseinrichtung in diesen seitlichen Bereichen viel Raum in Anspruch nimmt.

Die Halterungen sind dabei verstellbar, wodurch eine automatische und flexible Positionierung der Lichtschranke jeweils in Abhängigkeit des verwendeten Biegewerkzeuges ermöglicht wird. Aus dem Stand der Technik ist hierzu bekannt, dass von einer Bedienperson die Werkzeughöhe über eine Benutzerschnittstelle der Biegepresse eingegeben wird und dass aus der Werkzeughöhe automatisch die Soll-Position für die Lichtschranke errechnet wird.

Die Werkzeughalterungen von Biegepressen sind vielfach in Form von Führungsschienen ausgebildet. Das Wechseln von Biegewerkzeugen in bzw. aus der Werkzeughalterung einer Biegepresse erfolgt durch eine Bedienperson dadurch, dass der Halteteil eines Biegewerkzeuges an gewünschter Stelle in den Schlitz der Führungsschiene eingesetzt wird. Es gibt jedoch Biegewerkzeuge, bei denen eine solche Vorgehensweise aufgrund ihres hohen Gewichts und/oder ihrer Formgebung nicht möglich ist. D.h. solche Werkzeuge können nicht über den Schlitz der Führungsschiene, also in einer Richtung quer zur Längserstreckung der Schiene, gerüstet werden.

Die DE202010017960U1 offenbart ein Schutzsystem für die Bediensicherheit an einer Maschine, insbesondere Gesenkbiegepresse, mit einer primären Schutzvorrichtung und einer sekundären Schutzvorrichtung. Die primäre mitfahrende Schutzvorrichtung hat einen Lichtsender und einen Lichtempfänger, die rechts und links vom ersten Werkzeugteil an der Gesenkbiegepresse befestigt sind. Der Lichtsender erzeugt dabei einen Lichtstrahl, der parallel zur vorlaufenden Kante des ersten Werkzeugteils verläuft und den Lichtempfänger beleuchtet. So bilden der Lichtsender und der Lichtempfänger eine Lichtschranke, die den ersten Schutzbereich vor und um die Kante des ersten Werkzeugteils herum absichert. Die automatische Verstellbewegung der primären Schutzvorrichtung wird mit einem Stellantrieb ausgeführt.

Die EP1259340B 1 und die WO2005030410A1 auf welche der Oberbegriff der Ansprüche 1 und 2 basiert, offenbaren jeweils eine Sicherheitseinrichtung für eine Fertigungsmaschine, z.B. eine Abkantpresse, insbesondere in Form einer Strahlensende- und Strahlenempfangsvorrichtung.

Aufgabe der vorliegenden Erfindung war es, die Nachteile des Standes der Technik zu überwinden und eine Biegepresse zur Verfügung zu stellen, mittels derer auch Werkzeuge mit speziell ausgebildetem Halteabschnitt, wie er insbesondere für schwerere bzw. größere Werkzeuge üblich ist, in Biegepressen mit einer Sicherheitseinrichtung nach Art einer Lichtschranke verwenden zu können. Das Wechseln, also das Einbringen und/oder Entfernen von solchen Biegewerkzeugen in bzw. aus der Werkzeughalterung der Biegepresse soll einfach und mit nur geringem Aufwand möglich sein. Die Biegepresse soll dabei hohen Sicherheitsstandards genügen.

Diese Aufgabe wird durch eine Biegepresse gemäß Anspruch 1 gelöst. Diese Aufgabe wird auch durch eine Biegepresse gemäß Anspruch 2 gelöst.

Die Halterung ist dabei durch den Verstellantrieb zwischen der ersten Relativposition (insbesondere einer Arbeitsstellung) und der zweiten Relativposition (auch als Parkstellung bezeichenbar) verstellbar.

Unter Plattform kann jegliches Gebilde verstanden werden, welches geeignet ist eine Werkzeughalterung zu tragen oder integral auszubilden und Kräfte, die beim Biegevorgang übertragen werden, aufzunehmen. Die erste Plattform und/oder die zweite Plattform können insbesondere als Pressbalken ausgebildet sein und/oder quer zur Arbeitsbewegung bzw. Pressrichtung eine Längserstreckung aufweisen.

Die stirnseitige Öffnung ermöglicht das Wechseln von Biegewerkzeugen, die aufgrund der Formgebung ihres Halteabschnitts, der z.B. mit Stiften zum Eingreifen in Rillen oder Nuten der Führungsschiene versehen sein kann, nicht quer zur Längserstreckung der Führungsschiene eingesetzt werden können. Das Biegewerkzeug wird mit seinem Halteabschnitt parallel zur Längserstreckung der Führungsschiene in diese eingeschoben. Gleichzeitig ist die Sicherheitseinrichtung derart ausgebildet, dass sie den von ihr in der Arbeitsstellung (entspricht der ersten Relativstellung) eingenommenen Bereich freigibt, wenn ein Werkzeugwechsel durchzuführen ist. Dazu wird der Verstellantrieb von der Steuereinrichtung angesteuert, wodurch die erste Halterung von der ersten Relativposition in die zweite Relativposition verfahren wird.

Die Sicherheitseinrichtung ist dabei so ausgebildet, dass die Position der Lichtschranke, die durch die Position des Lichtsenders an einer der Halterungen bestimmt wird, relativ zur ersten Werkzeughalterung bzw. zum darin gehaltenen Werkzeug eingestellt werden kann. Eine (vollständige oder teilweise) Unterbrechung der Lichtschranke bewirkt einen Schatten, der mittels des Lichtempfängers detektiert wird. Die mit dem Lichtempfänger verbundene Steuereinrichtung stoppt oder verlangsamt in Abhängigkeit eines detektierten Schattens die Arbeitsbewegung der Biegepresse.

Die Einstellung der Lichtschrankenposition erfolgt durch Bewegung der Halterung(en) quer zur Längserstreckung der Führungsschiene der Werkzeughalterung. Die Einstellbewegung einer Halterung zur Positionierung der Lichtschranke sowie die Verstellbewegung zwischen erster und zweiter Relativposition erfolgen durch denselben Verstellantrieb und entlang derselben Richtung, die vorzugsweise parallel zur Richtung der Arbeitsbewegung der Biegepresse steht und bevorzugt vertikal ist.

Der Vorteil der Erfindung besteht darin, dass die (erste und/oder - wie nachfolgend ausgeführt - die zweite) Halterung automatisch in die zweite Relativstellung gefahren werden kann und damit den Zugang zum Wechseln eines Biegewerkzeuges automatisch freigibt.

Unter "versperrtem Zugang zum Wechseln eines Biegewerkzeuges über die erste stirnseitige Öffnung" wird verstanden, dass die stirnseitige Öffnung ganz oder teilweise (durch die Halterung) verdeckt ist und/oder ein für den Werkzeugwechsel erforderlicher Bereich von der Halterung eingenommen wird. Entsprechend wird unter "freigegebenem Zugang" verstand, dass die stirnseitige Öffnung und der daran anschließende für den Werkzeugwechsel erforderliche Bereich von der Halterung freigegeben sind.

Der/die Verstellantrieb(e) kann insbesondere als Linearantrieb, z.B. eine Zahnstange mit Ritzel umfassend, ausgebildet sein.

Die Lichtschranke erstreckt sich im Wesentlichen parallel zur ersten Werkzeughalterung bzw. Führungsschiene.

Eine bevorzugte Ausführungsform zeichnet sich dadurch aus, dass die zweite Halterung an einer zweiten, der ersten Seite gegenüberliegenden Seite der ersten Plattform angeordnet ist und durch einen zweiten Verstellantrieb relativ zur ersten Plattform verstellbar ist, wobei die Steuereinrichtung mit dem zweiten Verstellantrieb verbunden ist, und dass die Führungsschiene an ihrem zweiten Ende eine zweite stirnseitige Öffnung zum Wechsel eines Biegewerkzeuges aufweist, und dass der Zugang zum Wechseln eines Biegewerkzeuges über die zweite stirnseitige Öffnung in einer ersten Relativposition der zweiten Halterung zur ersten Plattform versperrt ist und in einer zweiten Relativposition der zweiten Halterung zur ersten Plattform freigegeben ist. Im Hinblick auf die zweite Halterung sind hier dieselben Maßnahmen getroffen wie für die erste Halterung, sodass auch über das andere Ende der Führungsschiene Werkzeuge gewechselt (d.h. eingebracht bzw. entfernt werden können).

Eine bevorzugte Ausführungsform zeichnet sich dadurch aus, dass in der ersten Relativposition der ersten Halterung zur ersten Plattform die erste stirnseitige Öffnung der Führungsschiene zumindest teilweise, vorzugsweise vollständig, durch die erste Halterung verdeckt ist, und/oder dass in der ersten Relativposition der zweiten Halterung zur ersten Plattform die zweite stirnseitige Öffnung der Führungsschiene zumindest teilweise, vorzugsweise vollständig, durch die zweite Halterung verdeckt ist.

Eine bevorzugte Ausführungsform zeichnet sich dadurch aus, dass die erste Werkzeughalterung eine Oberwerkzeughalterung und die zweite Werkzeughalterung eine Unterwerkzeughalterung ist. Es hat sich gezeigt, dass eine Anordnung der ersten Sicherheitseinrichtung bzw. der Halterungen an der oberen, bewegbaren Plattform platzsparender ist, insbesondere wenn Biegevorgänge im Endbereich der Führungsschiene durchgeführt werden.

Eine bevorzugte Ausführungsform zeichnet sich dadurch aus, dass die erste Plattform relativ zur zweiten Plattform bewegbar ist. Hier ist die zweite Plattform stationär und die erste Plattform führt die Arbeitsbewegung gegenüber der stationären Plattform aus.

Eine bevorzugte Ausführungsform zeichnet sich dadurch aus, dass der erste Verstellantrieb unabhängig vom zweiten Verstellantrieb betätigbar ist. Auf diese Weise muss nur jene Halterung verstellt werden, in deren Bereich ein Werkzeugwechsel stattfinden soll. Außerdem können Feineinstellungen zwischen Lichtsender und Lichtempfänger vorgenommen werden. Eine bevorzugte Ausführungsform zeichnet sich dadurch aus, dass der Lichtsender und/oder der Lichtempfänger im unteren Bereich der jeweiligen Halterung angeordnet ist/sind und in der zweiten Relativposition der jeweiligen Halterung oberhalb der stirnseitigen Öffnung(en) der Führungsschiene angeordnet ist/sind. Damit kann die Sicherheitseinrichtung zumindest auf einer Seite der Plattform vollständig oberhalb der Werkzeughalterung "geparkt" werden.

Eine bevorzugte Ausführungsform zeichnet sich dadurch aus, dass die erste Werkzeughalterung eine Klemmeinrichtung zum Fixieren eines oder mehrerer in die Führungsschiene eingesetzten Biegewerkzeuge(s) aufweist, wobei die Klemmeinrichtung zwischen einem klemmenden Zustand und einem gelösten Zustand betätigbar ist, und dass die Klemmeinrichtung durch die Steuereinrichtung betätigbar ist und/oder der Zustand der Klemmeinrichtung durch die Steuereinrichtung auslesbar ist. Der (erfasste) Zustand der Klemmeinrichtung kann von der Steuereinrichtung dazu herangezogen werden, die Halterung(en) durch den/die Verstellantrieb(e) zu verstellen. Bei gelöstem Zustand bzw. beim Lösen der Klemmeinrichtung kann die Halterung automatisch in die zweite Relativposition (Parkposition) gebracht werden, wodurch ein sofortiger Werkzeugwechsel z.B. durch die Bedienperson ermöglicht wird.

Eine bevorzugte Ausführungsform zeichnet sich dadurch aus, dass die Biegepresse eine zweite Sicherheitseinrichtung, die in einen eine Sicherheitsfunktion ausübenden Zustand und in einen nicht-sichernden Zustand bringbar ist, und dass die Sicherheitseinrichtung einen mit der Steuereinrichtung verbundenen Sensor zum Erfassen des aktuellen Zustandes der Sicherheitseinrichtung umfasst, und dass die Steuereinrichtung eingerichtet ist, um in Abhängigkeit des von dem Sensor erfassten Zustandes der zweiten Sicherheitseinrichtung, vorzugsweise bei nicht-sicherndem Zustand, die erste Halterung und/oder die zweite Halterung in die zweite Relativposition zu bringen.

Eine bevorzugte Ausführungsform zeichnet sich dadurch aus, dass die Biegepresse als zweite Sicherheitseinrichtung eine Abdeckung, insbesondere eine Türe oder ein Fenster umfasst, die zwischen einer geschlossenen Stellung, in der der seitliche Zugang zum Inneren der Biegepresse versperrt oder erschwert ist (entspricht der Sicherheitsfunktion), und einer geöffneten Stellung bewegbar ist. Ein mit der Steuereinrichtung verbundener Sensor detektiert die Stellung der Abdeckung (geöffnet bzw. geschlossen). In Abhängigkeit der detektierten Stellung (geöffnet) kann nun die Steuereinrichtung die Halterung mittels des Verstellantriebes in die zweite Relativstellung (Parkposition) verfahren. Beispielsweise kann beim Öffnen der Abdeckung, insbesondere Türe, durch eine Bedienperson die Halterung automatisch in die zweite Relativposition verfahren werden, wodurch unmittelbar der Zugang für den Werkzeugwechsel freigegeben ist.

Eine bevorzugte Ausführungsform zeichnet sich dadurch aus, dass die Steuereinrichtung in einem, vorzugsweise deaktivierbaren, Betriebsmodus eingerichtet ist, um durch Ansteuerung des ersten und/oder zweiten Verstellantriebes die erste Halterung und/oder die zweite Halterung automatisch in die zweite Relativposition zu bewegen, wenn die Abdeckung in geöffnete Stellung gebracht wird oder sich in geöffneter Stellung befindet und/oder wenn die Klemmeinrichtung in gelösten Zustand gebracht wird oder sich in gelöstem Zustand befindet. Besonders bevorzugt ist jene Ausführungsform, bei der die Halterung(en) erst dann in die zweite Relativposition gefahren wird/werden, wenn beide Voraussetzungen erfüllt sind, d.h. Abdeckung offen und Klemmeinrichtung gelöst. Dies spiegelt die eindeutige Absicht der Bedienperson, einen Werkzeugwechsel vorzunehmen, wider.

Eine bevorzugte Ausführungsform zeichnet sich dadurch aus, dass die Steuereinrichtung in einem ersten Betriebsmodus eingerichtet ist, um zur Ausführung einer Arbeitsbewegung die erste Plattform mit einer ersten Geschwindigkeit in Richtung zweiter Plattform zu bewegen und unmittelbar vor Beginn des Biegevorganges am Werkstück oder wenn der Abstand zwischen einem von der ersten Werkzeughalterung gehaltenen Biegewerkzeug und dem zu bearbeitenden Werkstück ein vorgegebenes Maß, welches vorzugsweise höchstens 20mm, vorzugsweise höchstens 10mm, beträgt, unterschreitet, die erste Halterung und/oder zweite Halterung in die zweite Relativposition zu bewegen. Diese Option ist dann bevorzugt, wenn man seitlich an der (oberen) Werkzeughalterung vorbeibeigen möchte und die (z.B. senkrechte) Schachtellasche vor der Biegung (noch) nicht zur Kollision mit der ersten Sicherheitseinrichtung, insbesondere der Halterung, führt. Der erste Betriebsmodus dient somit dazu, eine Kollision der Sicherheitseinrichtung mit dem Werkstück während des (Auf-)Biegens zu verhindern. Bis zur bzw. bis kurz vor der zu erwartenden Kollision ist die erste Sicherheitseinrichtung jedoch aktiv, weshalb die Arbeitsbewegung zumindest bis zu diesem Zeitpunkt mit einer relativ hohen Geschwindigkeit erfolgen kann.

Eine bevorzugte Ausführungsform zeichnet sich dadurch aus, dass die Steuereinrichtung in einem zweiten Betriebsmodus eingerichtet ist, um die erste Halterung und/oder die zweite Halterung in die zweite Relativposition zu bewegen oder in der zweiten Relativposition zu belassen, bevor und/oder während die erste Plattform zur Ausführung einer Arbeitsbewegung mit einer zweiten Geschwindigkeit in Richtung zweiter Plattform bewegt wird. Diese Option wählt man, wenn man seitlich an der (oberen) Werkzeughalterung vorbeibeigen möchte und die (z.B.) senkrechte Schachtellasche schon vor der Biegung zur Kollision mit der ersten Sicherheitseinrichtung führt. Der zweite Betriebsmodus dient somit dazu, eine Kollision der Sicherheitseinrichtung mit dem Werkstück schon vor dem Biegen zu verhindern. Da eine solche Arbeitsbewegung ohne aktiver Sicherheitseinrichtung erfolgt, wird die zweite Geschwindigkeit vorzugsweise relativ niedrig gewählt.

Die Auswahl des ersten und/oder zweiten Betriebsmodus erfolgt vorzugsweise durch die Steuereinrichtung in Abhängigkeit des jeweiligen Biegeprogramms und/oder der Form der (entstehenden) Werkstücke bzw. der Ausgangswerkstücke.

Eine bevorzugte Ausführungsform zeichnet sich dadurch aus, dass die erste Geschwindigkeit größer, vorzugsweise zumindest 1,5 mal größer, besonders bevorzugt zumindest 2 mal größer, ist als die zweite Geschwindigkeit.

Eine bevorzugte Ausführungsform zeichnet sich dadurch aus, dass die Lichtschranke aus zumindest einem, zu einem Lichtfeld aufgeweiteten Lichtstrahl gebildet wird, und/oder mehrere, vorzugsweise parallel verlaufende Lichtstrahlen umfasst. In ersterem Fall kann eine Linse zur Aufweitung eines einzelnen Lichtstrahls verwendet werden. Bevorzugt ist ein homogenes Lichtfeld (quer zur Ausbreitungsrichtung der Lichtschranke). Unter dem Begriff "Lichtschranke" wird somit jegliche Art von Lichtstrahl(en) oder Lichtfeld(ern) - aus einem oder mehreren einzelnen Lichtstrahlen/-feldern verstanden. Es wird das Prinzip genützt, dass eine teilweise oder vollständige Unterbrechung (durch fremde Objekte bzw. eine Hand oder einen Finger einer Bedienperson, etc.) der Lichtschranke die Detektion einer Verdunklung bzw. eines Schattens durch den Lichtempfänger ermöglicht.

Eine bevorzugte Ausführungsform zeichnet sich dadurch aus, dass der Lichtempfänger ein Bildempfänger, vorzugsweise eine Kamera ist.

Das Ziel wird auch erreicht durch ein Verfahren zum Betreiben einer erfindungsgemäßen Biegepresse, wobei die Steuereinrichtung die erste Halterung und gegebenenfalls die zweite Halterung durch Ansteuerung des/der Verstellantriebe(s) in die zweite Relativposition bewegt.

Eine bevorzugte Ausführungsform zeichnet sich dadurch aus, dass die Steuereinrichtung in einem, vorzugsweise deaktivierbaren, Betriebsmodus durch Ansteuerung des ersten und/oder zweiten Verstellantriebes die erste Halterung und/oder die zweite Halterung automatisch in die zweite Relativposition bewegt, wenn die Abdeckung in geöffnete Stellung gebracht wird oder sich in geöffneter Stellung befindet und/oder wenn die Klemmeinrichtung in gelösten Zustand gebracht wird oder sich in gelöstem Zustand befindet.

Eine bevorzugte Ausführungsform zeichnet sich dadurch aus, dass die Steuereinrichtung in einem ersten Betriebsmodus zur Ausführung einer Arbeitsbewegung die erste Plattform mit einer ersten Geschwindigkeit in Richtung zweiter Plattform bewegt und unmittelbar vor Beginn des Biegevorganges oder wenn der Abstand zwischen einem von der ersten Werkzeughalterung gehaltenen Biegewerkzeug und dem zu bearbeitenden Werkstück ein vorgegebenes Maß, welches vorzugsweise höchstens 20mm, vorzugsweise höchstens 10mm, beträgt, unterschreitet, die erste Halterung und/oder zweite Halterung in die zweite Relativposition bewegt.

Eine bevorzugte Ausführungsform zeichnet sich dadurch aus, dass die Steuereinrichtung in einem zweiten Betriebsmodus die erste Halterung und/oder die zweite Halterung in die zweite Relativposition bewegt oder in der zweiten Relativposition belässt, bevor und/oder während die erste Plattform zur Ausführung einer Arbeitsbewegung mit einer zweiten Geschwindigkeit in Richtung zweiter Plattform bewegt wird.

Eine bevorzugte Ausführungsform zeichnet sich dadurch aus, dass die erste Geschwindigkeit größer, vorzugsweise zumindest 1,5 mal größer, besonders bevorzugt zumindest 2 mal größer, ist als die zweite Geschwindigkeit.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Biegepresse;
- Fig. 2: die Biegepresse aus Fig. 1 mit geöffneten seitlichen Abdeckungen;
- Fig. 3: die stirnseitige Öffnung der Führungsschiene.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

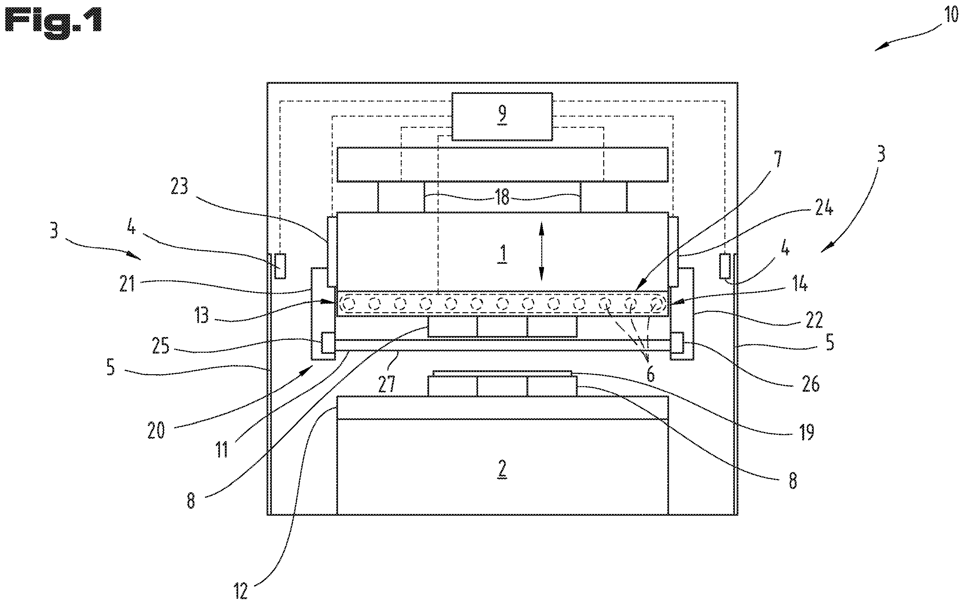

Fig. 1 zeigt eine Biegepresse 10 zum Biegen eines Werkstückes 19, hier in Form einer Abkantpresse. Eine erste (obere) Plattform 1 mit einer ersten Werkzeughalterung 11 ist zur Ausführung einer Arbeitsbewegung (siehe Doppelpfeil) relativ zu einer zweiten (unteren) Plattform 2 mit einer zweiten Werkzeughalterung 12 bewegbar. Die Arbeitsbewegung wird durch die Steuereinrichtung 9, die mit dem Pressantrieb 18 verbunden ist und diesen ansteuert, bewirkt.

In der dargestellten Ausführungsform ist die erste Werkzeughalterung 11 eine Oberwerkzeughalterung und die zweite Werkzeughalterung 12 eine Unterwerkzeughalterung. Die erste Plattform 1 ist relativ zur zweiten, stationären Plattform 2 bewegbar.

Die Biegepresse 10 umfasst eine erste Sicherheitseinrichtung 20 zum Erzeugen einer zwischen den Werkzeughalterungen 11, 12 quer zur Arbeitsbewegung der bewegbaren Plattform 1 verlaufenden Lichtschranke 27. Die erste Sicherheitseinrichtung 20 weist eine erste Halterung 21 und eine (gegenüberliegende) zweite Halterung 22 auf, wobei eine der Halterungen 21 einen Lichtsender 25 und die andere Halterung 22 einen Lichtempfänger 26 trägt. Lichtsender 25 und Lichtempfänger 26 sind ebenfalls mit der Steuereinrichtung 9 verbunden (nicht dargestellt).

Die erste Halterung 21 ist an einer ersten Seite der ersten Plattform 1 angeordnet und durch einen ersten Verstellantrieb 23 relativ zur ersten Plattform 1 verstellbar. Die zweite Halterung 22 ist an einer zweiten, der ersten Seite gegenüberliegenden Seite der ersten Plattform 1 angeordnet und durch einen zweiten Verstellantrieb 24 relativ zur ersten Plattform 1 verstellbar. Die Steuereinrichtung 9 ist mit dem ersten Verstellantrieb 23 und dem zweiten Verstellantrieb 24 verbunden.

Die erste Sicherheitseinrichtung 20 ist dabei so ausgebildet, dass die Position der Lichtschranke 27, die durch die Position des Lichtsenders 25 an einer der Halterungen bestimmt wird, relativ zur ersten Werkzeughalterung 11 bzw. zum darin gehaltenen Werkzeug 8 eingestellt werden kann. Eine (vollständige oder teilweise) Unterbrechung der Lichtschranke 27 bewirkt einen Schatten, der mittels des Lichtempfängers 26 detektiert wird. Die mit dem Lichtempfänger 26 verbundene Steuereinrichtung 9 stoppt oder verlangsamt in Abhängigkeit eines detektierten Schattens die Arbeitsbewegung der Biegepresse 10 (Ansteuerung des Pressantriebes 18).

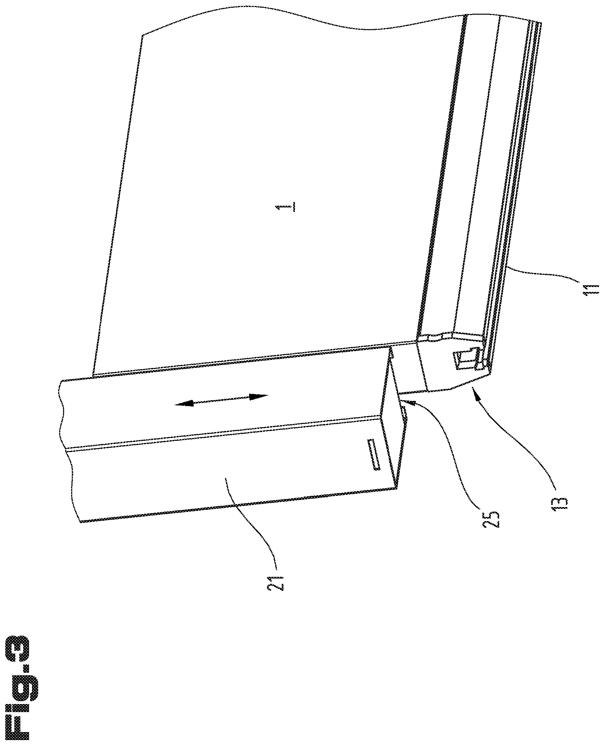

Zumindest die erste Werkzeughalterung 11, vorzugsweise auch die zweite Werkzeughalterung 12, ist in Form einer Führungsschiene ausgebildet, die an ihrem ersten Ende eine erste stirnseitige Öffnung 13 zum Wechseln eines Biegewerkzeuges 8 aufweist (siehe auch Fig. 3).

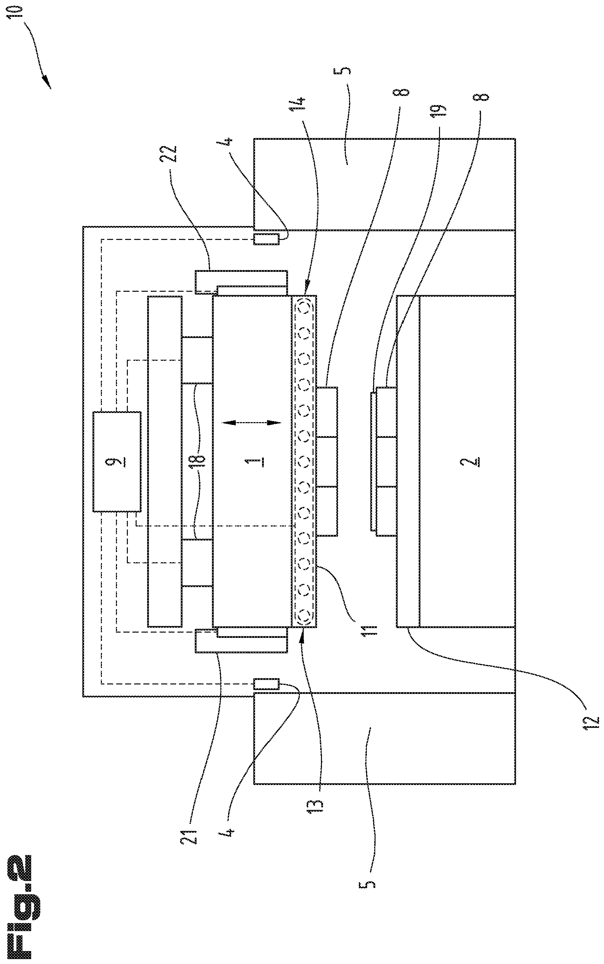

Der Zugang zum Wechseln eines Biegewerkzeuges 8 über die erste stirnseitige Öffnung 13 ist in einer ersten Relativposition der ersten Halterung 21 zur ersten Plattform 1 versperrt (Fig. 1) und in einer zweiten Relativposition der ersten Halterung 21 zur ersten Plattform 1 freigegeben (Fig. 2 und 3).

Die Führungsschiene kann auch an ihrem zweiten Ende eine zweite stirnseitige Öffnung 14 zum Wechsel eines Biegewerkzeuges 8 aufweisen. Die zweite Halterung 22 kann - wie die erste Halterung - den Zugang zur stirnseitigen Öffnung 14 versperren (Fig. 1) oder freigeben (Fig. 2).

Wie in Fig. 1 zu sehen ist in der ersten Relativposition die erste stirnseitige Öffnung 13 der Führungsschiene zumindest teilweise, hier sogar vollständig, durch die erste Halterung 21 verdeckt. Ebenso ist die zweite stirnseitige Öffnung 14 durch die zweite Halterung 22 verdeckt.

Der erste Verstellantrieb 23 ist vorzugsweise unabhängig vom zweiten Verstellantrieb 24 betätigbar, sodass nur die Halterung an jener Seite in die zweite Relativposition (Parkposition) bewegt werden muss, an der auch ein Werkzeugwechsel stattfindet.

Der Lichtsender 25 bzw. der Lichtempfänger 26 sind im unteren Bereich der jeweiligen Halterung 21, 22 angeordnet. In der zweiten Relativposition (Fig. 2 und 3) der jeweiligen Halterung 21, 22 befinden sich demnach der Lichtsender bzw. Lichtempfänger oberhalb der stirnseitigen Öffnungen 13, 14 der Führungsschiene (siehe insb. Fig. 3).

Aus den Fig. 1 und 2 ist ferner zu erkennen, dass die erste Werkzeughalterung 11 eine Klemmeinrichtung 7 zum Fixieren eines oder mehrerer in die Führungsschiene eingesetzten Biegewerkzeuge(s) 8 aufweist. Die Klemmeinrichtung 7 ist zwischen einem (das Biegewerkzeug) klemmenden Zustand und einem gelösten Zustand betätigbar. Die Klemmeinrichtung 7 ist dabei durch die Steuereinrichtung 9 betätigbar und/oder ist der Zustand der Klemmeinrichtung 7 durch die Steuereinrichtung 9 auslesbar. Die Verbindung zwischen Steuereinrichtung 9 und Klemmeinrichtung 7 ist durch eine strichlierte Linie angedeutet.

Die Klemmeinrichtung kann eine Vielzahl von Klemmelementen 6, z.B. in Form von Stiften, aufweisen, die z.B. durch einen hydraulischen Antrieb in das Innere der Führungsschiene gegen den Halteabschnitt eines Biegewerkzeuges gedrückt werden.

Die Biegepresse 10 kann auch zumindest eine zweite Sicherheitseinrichtung 3 aufweisen, die in einen eine Sicherheitsfunktion ausübenden Zustand und in einen nicht-sichernden Zustand bringbar ist. Dabei kann die zweite Sicherheitseinrichtung 3 einen mit der Steuereinrichtung 9 verbundenen Sensor 4 zum Erfassen des aktuellen Zustandes der Sicherheitseinrichtung 3 umfassen. Die Steuereinrichtung 9 kann nun vorzugsweise dazu eingerichtet sein, um in Abhängigkeit des von dem Sensor 4 erfassten Zustandes der zweiten Sicherheitseinrichtung 3, vorzugsweise bei nicht-sicherndem Zustand, die erste Halterung 21 und/oder die zweite Halterung 22 in die zweite Relativposition zu bringen.

Die zweite Sicherheitseinrichtung kann - wie in der bevorzugten Ausführungsform der Fig. 1 gezeigt - z.B. in Form einer Abdeckung 5, insbesondere einer Türe oder einem Fenster, ausgebildet sein und zwischen einer geschlossenen Stellung, in der der seitliche Zugang zum Inneren der Biegepresse 10 versperrt oder erschwert ist (Fig. 1), und einer geöffneten Stellung (Fig. 2) bewegbar ist.

Die Steuereinrichtung 9 kann in einem, vorzugsweise deaktivierbaren, Betriebsmodus eingerichtet, insbesondere programmiert, sein, um durch Ansteuerung des ersten und/oder zweiten Verstellantriebes 23, 24 die erste Halterung 21 und/oder die zweite Halterung 22 automatisch in die zweite Relativposition zu bewegen, wenn die Abdeckung 5 in geöffnete Stellung gebracht wird oder sich in geöffneter Stellung befindet (Fig. 2) und/oder wenn die Klemmeinrichtung 7 in gelösten Zustand gebracht wird oder sich in gelöstem Zustand befindet. Dadurch wird das Wechseln eines Biegewerkzeuges (durch eine stirnseitige Öffnung) z.B. durch eine Bedienperson wesentlich erleichtert, da das Zurückfahren der Halterung und das dadurch bewirkte Freigeben des Zuganges, automatisch erfolgen kann.

In einem weiteren, ersten Betriebsmodus (Arbeitsmodus) kann die Steuereinrichtung 9 dazu eingerichtet bzw. programmiert sein, um zur Ausführung einer Arbeitsbewegung die erste Plattform 1 mit einer ersten Geschwindigkeit in Richtung zweiter Plattform 2 zu bewegen und unmittelbar vor Beginn des Biegevorganges am Werkstück 19 oder wenn der Abstand zwischen einem von der ersten Werkzeughalterung 11 gehaltenen Biegewerkzeug 8 und dem zu bearbeitenden Werkstück 19 ein vorgegebenes Maß, welches vorzugsweise höchstens 20mm, vorzugsweise höchstens 10mm, beträgt, unterschreitet, die erste Halterung 21 und/oder zweite Halterung 22 in die zweite Relativposition zu bewegen. In der zweiten Relativposition behindert die entsprechende Halterung den Biegevorgang nicht und kann auch eine Aufbiegung des Werkstückes in einen Bereich erfolgen, der sich seitlich der stirnseitigen Öffnung befindet.

In einem zweiten Betriebsmodus (Arbeitsmodus) kann die Steuereinrichtung dazu eingerichtet, insbesondere programmiert, sein, um die erste Halterung 21 und/oder die zweite Halterung 22 in die zweite Relativposition zu bewegen oder in der zweiten Relativposition zu belassen, bevor und/oder während die erste Plattform 1 zur Ausführung einer Arbeitsbewegung mit einer zweiten Geschwindigkeit in Richtung zweiter Plattform 2 bewegt wird. Dieser Betriebsmodus wird in Fällen angewandt, in denen eine Kollision der Halterung mit dem Werkstück bereits vor der eigentlichen Biegung erfolgen würde.

Die erste Geschwindigkeit ist größer, vorzugsweise zumindest 1,5 mal größer, besonders bevorzugt zumindest 2 mal größer, als die zweite Geschwindigkeit. Aufgrund der deaktivierten Sicherheitsfunktion (der ersten Sicherheitseinrichtung) im zweiten Betriebsmodus wird hier die Arbeitsbewegung langsamer durchgeführt.

Die Lichtschranke 27, insbesondere Laserlichtschranke, kann aus zumindest einem, zu einem Lichtfeld aufgeweiteten Lichtstrahl gebildet werden, und/oder mehrere, vorzugsweise parallel verlaufende Lichtstrahlen umfassen. Der Lichtempfänger 26 kann ein Bildempfänger, vorzugsweise eine Kamera, sein.

Die Erfindung betrifft auch das Verfahren zum Betreiben einer Biegepresse 10, bei dem die Steuereinrichtung 9 die erste Halterung 21 und gegebenenfalls die zweite Halterung 22 durch Ansteuerung des/der Verstellantriebe(s) 23, 24 in die zweite Relativposition bewegt. Die entsprechenden Verfahrensschritte sind bereits eingangs beschrieben worden und gehen aus der vorangegangenen Figurenbeschreibung hervor. Zur Vermeidung von Wiederholungen wird daher an dieser Stelle nochmals auf die betreffenden Textstellen verwiesen.

### Bezugszeichenaufstellung

- 1: erste Plattform
- 2: zweite Plattform
- 3: zweite Sicherheitseinrichtung
- 4: Sensor
- 5: Abdeckung
- 6: Klemmelemente
- 7: Klemmeinrichtung
- 8: Biegewerkzeug
- 9: Steuereinrichtung
- 10: Biegepresse
- 11: erste Werkzeughalterung
- 12: zweite Werkzeughalterung
- 13: erste stirnseitige Öffnung
- 14: zweite stirnseitige Öffnung
- 18: Pressantrieb
- 19: Werkstück
- 20: erste Sicherheitseinrichtung
- 21: erste Halterung
- 22: zweite Halterung
- 23: erster Verstellantrieb
- 24: zweiter Verstellantrieb
- 25: Lichtsender
- 26: Lichtempfänger
- 27: Lichtschranke

## Patentansprüche

1. Biegepresse (10) zum Biegen eines Werkstückes (19), insbesondere Abkantpresse, umfassend
- eine erste Plattform (1) mit einer ersten Werkzeughalterung (11) und eine zweite Plattform (2) mit einer zweiten Werkzeughalterung (12), wobei eine der Plattformen (1) zur Ausführung einer Arbeitsbewegung relativ zur anderen Plattform (2) bewegbar ist,
- eine erste Sicherheitseinrichtung (20) zum Erzeugen einer zwischen den Werkzeughalterungen (11, 12) quer zur Arbeitsbewegung der bewegbaren Plattform (1) verlaufenden Lichtschranke (27), insbesondere Laserlichtschranke, wobei die erste Sicherheitseinrichtung (20) eine erste Halterung (21) und eine zweite Halterung (22) aufweist, wobei eine der Halterungen (21) einen Lichtsender (25) und die andere Halterung (22) einen Lichtempfänger (26) trägt und wobei die erste Halterung (21) an einer ersten Seite der ersten Plattform (1) angeordnet ist,
- eine Steuereinrichtung (9),
wobei die erste Werkzeughalterung (11) in Form einer Führungsschiene ausgebildet ist, die an ihrem ersten Ende eine erste stirnseitige Öffnung (13) zum Wechseln eines Biegewerkzeuges (8) aufweist,
und wobei der Zugang zum Wechseln eines Biegewerkzeuges (8) über die erste stirnseitige Öffnung (13) in einer ersten Relativposition der ersten Halterung (21) zur ersten Plattform (1) versperrt ist und in einer zweiten Relativposition der ersten Halterung (21) zur ersten Plattform (1) freigegeben ist,
**dadurch gekennzeichnet, dass** die erste Halterung (21) durch einen ersten Verstellantrieb (23) relativ zur ersten Plattform (1) verstellbar ist und dass die Steuereinrichtung (9) mit dem ersten Verstellantrieb (23) verbunden ist,
und dass die Biegepresse (10) eine zweite Sicherheitseinrichtung (3), die in einen eine Sicherheitsfunktion ausübenden Zustand und in einen nicht-sichernden Zustand bringbar ist, umfasst, wobei die Sicherheitseinrichtung (3) einen mit der Steuereinrichtung (9) verbundenen Sensor (4) zum Erfassen des aktuellen Zustandes der Sicherheitseinrichtung (3) umfasst, und dass die Steuereinrichtung (9) eingerichtet ist, um in Abhängigkeit des von dem Sensor (4) erfassten Zustandes der zweiten Sicherheitseinrichtung (3), vorzugsweise bei nicht-sicherndem Zustand, die erste Halterung (21) in die zweite Relativposition zu bringen.

2. Biegepresse (10) zum Biegen eines Werkstückes (19), insbesondere Abkantpresse, vorzugsweise nach Anspruch 1, umfassend
- eine erste Plattform (1) mit einer ersten Werkzeughalterung (11) und eine zweite Plattform (2) mit einer zweiten Werkzeughalterung (12), wobei eine der Plattformen (1) zur Ausführung einer Arbeitsbewegung relativ zur anderen Plattform (2) bewegbar ist,
- eine erste Sicherheitseinrichtung (20) zum Erzeugen einer zwischen den Werkzeughalterungen (11, 12) quer zur Arbeitsbewegung der bewegbaren Plattform (1) verlaufenden Lichtschranke (27), insbesondere Laserlichtschranke, wobei die erste Sicherheitseinrichtung (20) eine erste Halterung (21) und eine zweite Halterung (22) aufweist, wobei eine der Halterungen (21) einen Lichtsender (25) und die andere Halterung (22) einen Lichtempfänger (26) trägt und wobei die erste Halterung (21) an einer ersten Seite der ersten Plattform (1) angeordnet und durch einen ersten Verstellantrieb (23) relativ zur ersten Plattform (1) verstellbar ist,
- eine Steuereinrichtung (9),
wobei die erste Werkzeughalterung (11) in Form einer Führungsschiene ausgebildet ist, die an ihrem ersten Ende eine erste stirnseitige Öffnung (13) zum Wechseln eines Biegewerkzeuges (8) aufweist,
und wobei der Zugang zum Wechseln eines Biegewerkzeuges (8) über die erste stirnseitige Öffnung (13) in einer ersten Relativposition der ersten Halterung (21) zur ersten Plattform (1) versperrt ist und in einer zweiten Relativposition der ersten Halterung (21) zur ersten Plattform (1) freigegeben ist,
**dadurch gekennzeichnet, dass** die erste Halterung (21) durch einen ersten Verstellantrieb (23) relativ zur ersten Plattform (1) verstellbar ist und dass die Steuereinrichtung (9) mit dem ersten Verstellantrieb (23) verbunden ist,
und dass die erste Werkzeughalterung (11) eine Klemmeinrichtung (7) zum Fixieren eines oder mehrerer in die Führungsschiene eingesetzten Biegewerkzeuge(s) (8) aufweist, wobei die Klemmeinrichtung (7) zwischen einem klemmenden Zustand und einem gelösten Zustand betätigbar ist, und dass die Klemmeinrichtung (7) durch die Steuereinrichtung (9) betätigbar ist und/oder der Zustand der Klemmeinrichtung (7) durch die Steuereinrichtung (9) auslesbar ist, und dass die Steuereinrichtung (9) in einem, vorzugsweise deaktivierbaren, Betriebsmodus eingerichtet ist, um durch Ansteuerung des ersten Verstellantriebes (23) die erste Halterung (21) automatisch in die zweite Relativposition zu bewegen, wenn die Klemmeinrichtung (7) in gelösten Zustand gebracht wird oder sich in gelöstem Zustand befindet.

3. Biegepresse nach Anspruch 1 oder 2, **dadurch gekennzeichnet, dass** die zweite Halterung (22) an einer zweiten, der ersten Seite gegenüberliegenden Seite der ersten Plattform (1) angeordnet ist und durch einen zweiten Verstellantrieb (24) relativ zur ersten Plattform (1) verstellbar ist, wobei die Steuereinrichtung (9) mit dem zweiten Verstellantrieb (24) verbunden ist, und dass die Führungsschiene an ihrem zweiten Ende eine zweite stirnseitige Öffnung (14) zum Wechsel eines Biegewerkzeuges (8) aufweist, und dass der Zugang zum Wechseln eines Biegewerkzeuges (8) über die zweite stirnseitige Öffnung (14) in einer ersten Relativposition der zweiten Halterung (22) zur ersten Plattform (1) versperrt ist und in einer zweiten Relativposition der zweiten Halterung (22) zur ersten Plattform (1) freigegeben ist.

4. Biegepresse nach einem der vorhergehenden Ansprüche, **dadurch gekennzeichnet, dass** in der ersten Relativposition der ersten Halterung (21) zur ersten Plattform (1) die erste stirnseitige Öffnung (13) der Führungsschiene zumindest teilweise, vorzugsweise vollständig, durch die erste Halterung (21) verdeckt ist,
und/oder dass in der ersten Relativposition der zweiten Halterung (22) zur ersten Plattform (1) die zweite stirnseitige Öffnung (14) der Führungsschiene zumindest teilweise, vorzugsweise vollständig, durch die zweite Halterung (22) verdeckt ist.

5. Biegepresse nach einem der vorhergehenden Ansprüche, **dadurch gekennzeichnet, dass** die erste Werkzeughalterung (11) eine Oberwerkzeughalterung und die zweite Werkzeughalterung (12) eine Unterwerkzeughalterung ist
und/oder dass die erste Plattform (1) relativ zur zweiten Plattform (2) bewegbar ist.

6. Biegepresse nach einem der Ansprüche 3 bis 5, **dadurch gekennzeichnet, dass** der erste Verstellantrieb (23) unabhängig vom zweiten Verstellantrieb (24) betätigbar ist.

7. Biegepresse nach einem der vorhergehenden Ansprüche, **dadurch gekennzeichnet, dass** der Lichtsender (25) und/oder der Lichtempfänger (26) im unteren Bereich der jeweiligen Halterung (21, 22) angeordnet ist/sind und in der zweiten Relativposition der jeweiligen Halterung (21, 22) oberhalb der stirnseitigen Öffnung(en) (13, 14) der Führungsschiene angeordnet ist/sind.

8. Biegepresse nach Anspruch 1 oder nach einem der Ansprüche 3-7, **dadurch gekennzeichnet,**
**dass** die erste Werkzeughalterung (11) eine Klemmeinrichtung (7) zum Fixieren eines oder mehrerer in die Führungsschiene eingesetzten Biegewerkzeuge(s) (8) aufweist, wobei die Klemmeinrichtung (7) zwischen einem klemmenden Zustand und einem gelösten Zustand betätigbar ist, und dass die Klemmeinrichtung (7) durch die Steuereinrichtung (9) betätigbar ist und/oder der Zustand der Klemmeinrichtung (7) durch die Steuereinrichtung (9) auslesbar ist.

9. Biegepresse nach einem der vorhergehenden Ansprüche, **dadurch gekennzeichnet, dass** die Biegepresse (10) als zweite Sicherheitseinrichtung eine Abdeckung (5), insbesondere eine Türe oder ein Fenster, umfasst, die zwischen einer geschlossenen Stellung, in der der seitliche Zugang zum Inneren der Biegepresse (10) versperrt oder erschwert ist, und einer geöffneten Stellung bewegbar ist.

10. Biegepresse nach Anspruch 9, **dadurch gekennzeichnet, dass** die Steuereinrichtung (9) in einem, vorzugsweise deaktivierbaren, Betriebsmodus eingerichtet ist, um durch Ansteuerung des ersten und/oder zweiten Verstellantriebes (23, 24) die erste Halterung (21) und/oder die zweite Halterung (22) automatisch in die zweite Relativposition zu bewegen, wenn die Abdeckung (5) in geöffnete Stellung gebracht wird oder sich in geöffneter Stellung befindet und/oder wenn die Klemmeinrichtung (7) in gelösten Zustand gebracht wird oder sich in gelöstem Zustand befindet, wobei vorzugsweise die Halterung(en) (21, 22) erst dann in die zweite Relativposition gefahren wird/werden, wenn beide Voraussetzungen erfüllt sind, d.h. Abdeckung (5) offen und Klemmeinrichtung (7) gelöst.

11. Biegepresse nach einem der vorhergehenden Ansprüche, **dadurch gekennzeichnet, dass** die Steuereinrichtung (9) in einem ersten Betriebsmodus eingerichtet ist, um zur Ausführung einer Arbeitsbewegung die erste Plattform (1) mit einer ersten Geschwindigkeit in Richtung zweiter Plattform (2) zu bewegen und unmittelbar vor Beginn des Biegevorganges am Werkstück (19) oder wenn der Abstand zwischen einem von der ersten Werkzeughalterung (11) gehaltenen Biegewerkzeug (8) und dem zu bearbeitenden Werkstück (19) ein vorgegebenes Maß, welches vorzugsweise höchstens 20mm, vorzugsweise höchstens 10mm, beträgt, unterschreitet, die erste Halterung (21) und/oder zweite Halterung (22) in die zweite Relativposition zu bewegen.

12. Biegepresse nach einem der vorhergehenden Ansprüche, **dadurch gekennzeichnet, dass** die Steuereinrichtung (9) in einem zweiten Betriebsmodus eingerichtet ist, um die erste Halterung (21) und/oder die zweite Halterung (22) in die zweite Relativposition zu bewegen oder in der zweiten Relativposition zu belassen, bevor und/oder während die erste Plattform (1) zur Ausführung einer Arbeitsbewegung mit einer zweiten Geschwindigkeit in Richtung zweiter Plattform (2) bewegt wird.

13. Biegepresse nach Anspruch 12, **dadurch gekennzeichnet, dass** die erste Geschwindigkeit größer, vorzugsweise zumindest 1,5 mal größer, besonders bevorzugt zumindest 2 mal größer, ist als die zweite Geschwindigkeit.

14. Biegepresse nach einem der vorhergehenden Ansprüche, **dadurch gekennzeichnet, dass** die Lichtschranke (27) aus zumindest einem, zu einem Lichtfeld aufgeweiteten Lichtstrahl gebildet wird, und/oder mehrere, vorzugsweise parallel verlaufende Lichtstrahlen umfasst.

15. Biegepresse nach einem der vorhergehenden Ansprüche, **dadurch gekennzeichnet, dass** der Lichtempfänger (26) ein Bildempfänger, vorzugsweise eine Kamera ist.

16. Verfahren zum Betreiben einer Biegepresse (10) nach einem der vorhergehenden Ansprüche, **dadurch gekennzeichnet, dass** die Steuereinrichtung (9) die erste Halterung (21) und gegebenenfalls die zweite Halterung (22) durch Ansteuerung des/der Verstellantriebe(s) (23, 24) in die zweite Relativposition bewegt.

17. Verfahren nach Anspruch 16, wobei die die Biegepresse (10) nach Anspruch 10 ausgebildet ist, **dadurch gekennzeichnet, dass** die Steuereinrichtung (9) in einem, vorzugsweise deaktivierbaren, Betriebsmodus durch Ansteuerung des ersten und/oder zweiten Verstellantriebes (23, 24) die erste Halterung (21) und/oder die zweite Halterung (22) automatisch in die zweite Relativposition bewegt, wenn die Abdeckung (5) in geöffnete Stellung gebracht wird oder sich in geöffneter Stellung befindet und/oder wenn die Klemmeinrichtung (7) in gelösten Zustand gebracht wird oder sich in gelöstem Zustand befindet.

18. Verfahren nach Anspruch 16 oder 17, **dadurch gekennzeichnet, dass** die Steuereinrichtung (9) in einem ersten Betriebsmodus zur Ausführung einer Arbeitsbewegung die erste Plattform (1) mit einer ersten Geschwindigkeit in Richtung zweiter Plattform (2) bewegt und unmittelbar vor Beginn des Biegevorganges am Werkstück (19) oder wenn der Abstand zwischen einem von der ersten Werkzeughalterung (11) gehaltenen Biegewerkzeug (8) und dem zu bearbeitenden Werkstück (19) ein vorgegebenes Maß, welches vorzugsweise höchstens 20mm, vorzugsweise höchstens 10mm, beträgt, unterschreitet, die erste Halterung (21) und/oder zweite Halterung (22) in die zweite Relativposition bewegt.

19. Verfahren nach einem der Ansprüche 16 bis 18, **dadurch gekennzeichnet, dass** die Steuereinrichtung (9) in einem zweiten Betriebsmodus die erste Halterung (21) und/oder die zweite Halterung (22) in die zweite Relativposition bewegt oder in der zweiten Relativposition belässt, bevor und/oder während die erste Plattform (1) zur Ausführung einer Arbeitsbewegung mit einer zweiten Geschwindigkeit in Richtung zweiter Plattform (2) bewegt wird.

20. Verfahren nach Anspruch 19, **dadurch gekennzeichnet, dass** die erste Geschwindigkeit größer, vorzugsweise zumindest 1,5 mal größer, besonders bevorzugt zumindest 2 mal größer, ist als die zweite Geschwindigkeit.

## Claims

1. A bending press (10) for bending a workpiece (19), in a particular a press brake, comprising
- a first platform (1) with a first tool mount (11) and a second platform (2) with a second tool mount (12), wherein one of the platforms (1) is movable relative to the other platform (2) for performing a working movement,
- a first safety device (20) for creating a light barrier (27), in particular a laser light barrier, extending between the tool mounts (11, 12) transversely to the working movement of the movable platform (1), wherein the first safety device (20) has a first mount (21) and a second mount (22), wherein one of the mounts (21) carries a light emitter (25) and the other mount (22) carries a light receiver (26), and wherein the first mount (21) is arranged on a first side of the first platform (1),
- a controller (9),
wherein the first tool mount (11) is designed in the form of a guide rail, which has at its first end a first front side opening (13) for changing a bending tool (8),
and wherein the access for changing a bending tool (8) via the first front side opening (13) is obstructed in a first relative position of the first mount (21) to the first platform (1) and is unblocked in a second relative position of the first mount (21) to the first platform (1),
**characterized in that** the first mount (21) is adjustable relative to the first platform (1) by a first adjustment drive (23) and that the controller (9) is connected to the first adjustment drive (23),
and that the bending press (10) comprises a second safety device (3), which can be brought into a state performing a safety function and into a non-securing state, wherein the safety device (3) comprises a sensor (4) for detecting the current state of the safety device (3), which sensor is connected to the controller (9), and that the controller (9) is configured to bring the first mount (21) - in dependence on the state of the second safety device (3) detected by the sensor (4), preferably if in a non-securing state - into the second relative position.

2. A bending press (10) for bending a workpiece (19), in particular a press brake, preferably according to claim 1, comprising
- a first platform (1) with a first tool mount (11) and a second platform (2) with a second tool mount (12), wherein one of the platforms (1) is movable relative to the other platform (2) for performing a working movement,
- a first safety device (20) for creating a light barrier (27), in particular laser light barrier, extending between the tool mounts (11, 12) transversely to the working movement of the movable platform (1), wherein the first safety device (20) has a first mount (21) and a second mount (22), wherein one of the mounts (21) carries a light emitter (25) and the other mount (22) carries a light receiver (26), and wherein the first mount (21) is arranged on a first side of the first platform (1) and is adjustable relative to the first platform (1) by a first adjustment drive (23),
- a controller (9),
wherein the first tool mount (11) is configured in the form of a guide rail, which has at its first end a first front side opening (13) for changing a bending tool (8),
and wherein the access for changing a bending tool (8) via the first front side opening (13) is obstructed in a first relative position of the first mount (21) to the first platform (1) and is unblocked in a second relative position of the first mount (21) to the first platform (1),
**characterized in that** the first mount (21) is adjustable relative to the first platform (1) by a first adjustment drive (23) and that the controller (9) is connected to the first adjustment drive (23),
and that the first tool mount (11) has a clamping device (7) for fixating one or multiple bending tool(s) (8) inserted in the guide rail, wherein the clamping device (7) can be actuated between a clamping state and a releasing state, and that the clamping device (7) is actuatable by the controller (9) and/or the state of the clamping device (7) is readable by the controller (9),
and that, in an operating mode, which can preferably be deactivated, the controller (9) is configured to automatically move - by controlling the first adjustment drive (23) - the first mount (21) into the second relative position when the clamping device (7) is brought into a releasing state or is in a releasing state.

3. The bending press according to claim 1 or 2, **characterized in that** the second mount (22) is arranged on a second side of the first platform (1) opposite the first side and can be adjusted relative to the first platform (1) by a second adjustment drive (24), wherein the controller (9) is connected to the second adjustment drive (24), and that the guide rail has at its second end a second front side opening (14) for changing a bending tool (8), and that the access for changing a bending tool (8) via the second front side opening (14) is obstructed in a first relative position of the second mount (22) to the first platform (1) and is unblocked in a second relative position of the second mount (22) to the first platform (1).

4. The bending press according to one of the preceding claims, **characterized in that** in the first relative position of the first mount (21) to the first platform (1), the first front side opening (13) of the guide rail is covered at least partly, preferably completely, by the first mount (21),
and/or that in the first relative position of the second mount (22) to the first platform (1), the second front side opening (14) of the guide rail is covered at least partially, preferably completely, by the second mount (22).

5. The bending press according to one of the preceding claims, **characterized in that** the first tool mount (11) is an upper tool mount and the second tool mount (12) is a lower tool mount,
and/or that the first platform (1) is movable relative to the second platform (2).

6. The bending press according to one of claims 3 to 5, **characterized in that** the first adjustment drive (23) is actuatable independently of the second adjustment drive (24).

7. The bending press according to one of the preceding claims, **characterized in that** the light emitter (25) and/or the light receiver (26) is/are arranged in the lower region of the respective mount (21, 22) and is/are arranged above the front side opening(s) (13, 14) of the guide rail when the respective mount (21, 22) is in the second relative position.

8. The bending press according to claim 1 or according to one of claims 3-7, **characterized in that** the first tool mount (11) has a clamping device (7) for fixating one or multiple bending tool(s) (8) inserted in the guide rail, wherein the clamping device (7) can be actuated between a clamping state and a releasing state, and that the clamping device (7) is actuatable by the controller (9) and/or the state of the clamping device (7) is readable by the controller (9).

9. The bending press according to one of the preceding claims, **characterized in that** the bending press (10) comprises a covering (5), in particular a door or a window, as a second safety device, which covering (5) can be moved between a closed position, in which the sideward access to the interior of the bending press (10) is obstructed or impeded, and an open position.

10. The bending press according to claim 9, **characterized in that**, in an operating mode, which can preferably be deactivated, the controller (9) is configured to automatically move - by controlling the first and/or second adjustment drive (23, 24) - the first mount (21) and/or the second mount (22) into the second relative position when the covering (5) is brought into an open position or is in an open position and/or when the clamping device (7) is brought into a releasing state or is in a releasing state, wherein the mount(s) (21, 22) is/are preferably moved into the second relative position only when both preconditions are met, i.e. covering (5) open and clamping device (7) released.

11. The bending press according to one of the preceding claims, **characterized in that**, in a first operating mode, the controller (9) is configured - for performing a working movement - to move the first platform (1) in the direction of the second platform (2) at a first speed, and to move the first mount (21) and/or second mount (22) into the second relative position immediately before the start of the bending operation on the workpiece (19) or when the distance between a bending tool (8) held by the first tool mount (11) and the workpiece (19) to be processed falls below a predefined value, which is preferably not more than 20 mm, preferably not more than 10 mm.

12. The bending press according to one of the preceding claims, **characterized in that**, in a second operating mode, the controller (9) is configured to move the first mount (21) and/or the second mount (22) into the second relative position or to leave them in the second relative position, before and/or while the first platform (1) - for performing a working movement - is moved in the direction of the second platform (2) at a second speed.

13. The bending press according to claim 12, **characterized in that** the first speed is greater, preferably at least 1.5 times greater, particularly preferably at least 2 times greater, than the second speed.

14. The bending press according to one of the preceding claims, **characterized in that** the light barrier (27) is formed by at least one light beam widened to a light field, and/or comprises multiple light beams, preferably extending in a parallel manner.

15. The bending press according to one of the preceding claims, **characterized in that** the light receiver (26) is an image receiver, preferably a camera.

16. A method for operating a bending press (10) according to one of the preceding claims, **characterized in that** the controller (9) moves the first mount (21) and optionally the second mount (22) by controlling the adjustment drive(s) (23, 24) into the second relative position.

17. The method according to claim 16, wherein the bending press (10) is designed according to claim 10, **characterized in that**, in an operating mode, which can preferably be deactivated, the controller (9) automatically moves - by controlling the first and/or second adjustment drive (23, 24) - the first mount (21) and/or the second mount (22) into the second relative position when the covering (5) is brought into an open position or is in an open position and/or when the clamping device (7) is brought into a releasing state or is in a releasing state.

18. The method according to claim 16 or 17, **characterized in that**, in a first operating mode, the controller (9) - for performing a working movement - moves the first platform (1) in the direction of the second platform (2) at a first speed, and moves the first mount (21) and/or second mount (22) into the second relative position immediately before the start of the bending operation on the workpiece (19) or when the distance between a bending tool (8) held by the first tool mount (11) and the workpiece (19) to be processed falls below a predefined value, which is preferably not more than 20 mm, preferably not more than 10 mm.

19. The method according to one of claims 16 to 18, **characterized in that**, in a second operating mode, the controller (9) moves the first mount (21) and/or the second mount (22) into the second relative position or leaves them in the second relative position, before and/or while the first platform (1) - for performing a working movement - is moved in the direction of the second platform (2) at a second speed.

20. The method according to claim 19, **characterized in that** the first speed is greater, preferably at least 1.5 times greater, particularly preferably at least 2 times greater, than the second speed.

## Revendications

1. Presse plieuse (10) pour le pliage d'une pièce (19), plus particulièrement presse de cintrage comprenant
- une première plateforme (1) avec un premier porte-outil (11) et une deuxième plateforme (2) avec un deuxième porte-outil (12), dans lequel une des plateformes (1) est mobile par rapport à l'autre plateforme (2) pour l'exécution d'un mouvement de travail,
- un premier dispositif de sécurité (20) pour la production d'une barrière photoélectrique (27) s'étendant entre les porte-outils (11, 12) transversalement par rapport au mouvement de travail de la plateforme mobile (1), plus particulièrement une barrière photoélectrique à laser, dans lequel le premier dispositif de sécurité (20) comprend un premier support (21) et un deuxième support (22), dans lequel un des supports (21) supporte un émetteur de lumière (25) et l'autre support (22) supporte un récepteur de lumière (26) et dans lequel le premier support (21) est disposé sur un premier côté de la première plateforme (1),
- un dispositif de commande (9),
dans lequel le premier porte-outil (11) est conçu sous la forme d'un rail de guidage qui présente, au niveau de sa première extrémité, une première ouverture frontale (13) pour le changement d'un outil de pliage (8),
et dans lequel l'accès pour le changement d'un outil de pliage (8) par l'intermédiaire de la première ouverture frontale (13) est bloqué dans une première position relative du premier support (21) par rapport à la première plateforme (1) et est libéré dans une deuxième position relative du premier support (21) par rapport à la première plateforme (1),
**caractérisé en ce que** le premier support (21) peut être déplacé par rapport à la première plateforme (1) à l'aide d'un premier entraînement de déplacement (23) et **en ce que** le dispositif de commande (9) est relié avec le premier entraînement de déplacement (23), et **en ce que** la presse plieuse (10) comprend un deuxième dispositif de commande (3) qui peut être amené dans un état exerçant une fonction de sécurité et dans un état non sécurisé, dans lequel le dispositif de sécurité (3) comprend un capteur (4), relié avec le dispositif de commande (9), pour la détection de l'état actuel du dispositif de sécurité (3) et **en ce que** le dispositif de commande (9) est conçu pour amener le premier support (21) dans la deuxième position relative en fonction de l'état du deuxième dispositif de sécurité (3) détecté par le capteur (4), de préférence dans le cas d'un état non sécurisé.

2. Presse plieuse (10) pour le pliage d'une pièce (19), plus particulièrement presse de cintrage, de préférence selon la revendication 1, comprenant
- une première plateforme (1) avec un premier porte-outil (11) et une deuxième plateforme (2) avec un deuxième porte-outil (12), dans lequel une des plateformes (1) est mobile par rapport à l'autre plateforme (2) pour l'exécution d'un mouvement de travail,
- un premier dispositif de sécurité (20) pour la production d'une barrière photoélectrique (27) s'étendant entre les porte-outils (11, 12) transversalement par rapport au mouvement de travail de la plateforme mobile (1), plus particulièrement une barrière photoélectrique à laser, dans lequel le premier dispositif de sécurité (20) comprend un premier support (21) et un deuxième support (22), dans lequel un des supports (21) supporte un émetteur de lumière (25) et l'autre support (22) supporte un récepteur de lumière (26) et dans lequel le premier support (21) est disposé sur un premier côté de la première plateforme (1) et peut être déplacé par rapport à la première plateforme (1) à l'aide d'un premier entraînement de déplacement (23),
- un dispositif de commande (9),
dans lequel le premier porte-outil (11) est conçu sous la forme d'un rail de guidage qui présente, au niveau de sa première extrémité, une première ouverture frontale (13) pour le changement d'un outil de pliage (8),
et dans lequel l'accès pour le changement d'un outil de pliage (8) par l'intermédiaire de la première ouverture frontale (13) est bloqué dans une première position relative du premier support (21) par rapport à la première plateforme (1) et est libéré dans une deuxième position relative du premier support (21) par rapport à la première plateforme (1),
**caractérisé en ce que** le premier support (21) peut être déplacé par rapport à la première plateforme (1) à l'aide d'un premier entraînement de déplacement (23) et **en ce que** le dispositif de commande (9) est relié avec le premier entraînement de déplacement (23), et **en ce que** le premier porte-outil (11) comprend un dispositif de serrage (7) pour la fixation d'un ou plusieurs porte-outils (8) insérés dans le rail de guidage, dans lequel le dispositif de serrage (7) peut être actionné entre un état de serrage et un état desserré et **en ce que** le dispositif de serrage (7) peut être actionné par le dispositif de commande (9) et/ou l'état du dispositif de serrage (7) peut être lu par le dispositif de commande (9) et **en ce que** le dispositif de commande (9) est conçu pour déplacer, dans un mode de fonctionnement, de préférence désactivable, le premier support (21) automatiquement vers la deuxième position relative par le contrôle du premier entraînement de déplacement (23), lorsque le dispositif de serrage (7) est amené dans l'état desserré ou se trouve dans l'état desserré.

3. Presse plieuse selon la revendication 1 ou 2, **caractérisée en ce que** le deuxième support (22) est disposé sur un deuxième côté de la plateforme (1), opposé au premier côté, et peut être déplacé par rapport à la première plateforme (1) à l'aide d'un deuxième entraînement de déplacement (24), dans lequel le dispositif de commande (9) est relié avec le deuxième entraînement de déplacement (24) et **en ce que** le rail de guidage comprend, au niveau de sa deuxième extrémité, une deuxième ouverture frontale (14) pour le changement d'un outil de pliage (8) et **en ce que** l'accès au changement d'un outil de pliage (8) par l'intermédiaire de la deuxième ouverture frontale (14) est bloqué dans une première position relative du deuxième support (22) par rapport à la première plateforme (1) et est libéré dans une deuxième position relative du deuxième support (22) par rapport à la première plateforme (1).

4. Presse plieuse selon l'une des revendications précédentes **caractérisée en ce que**, dans la première position relative du premier support (21) par rapport à la première plateforme (1), la première ouverture frontale (13) du rail de guidage est recouverte au moins partiellement, de préférence entièrement, par le premier support (21),
et/ou **en ce que**, dans la première position relative du deuxième support (22) par rapport à la première plateforme (1), la deuxième ouverture frontale (14) du rail de guidage est recouverte au moins partiellement, de préférence entièrement, par le deuxième support (22).

5. Presse plieuse selon l'une des revendications précédentes **caractérisée en ce que** le premier porte-outil (11) est un porte-outil supérieur et le deuxième porte-outil (12) est un porte-outil inférieur, et/ou **en ce que** la première plateforme (1) est mobile par rapport à la deuxième plateforme (2).

6. Presse plieuse selon l'une des revendications 3 à 5, **caractérisée en ce que** le premier entraînement de déplacement (23) peut être actionné indépendamment du deuxième entraînement de déplacement (24).

7. Presse plieuse selon l'une des revendications précédentes, **caractérisée en ce que** l'émetteur de lumière (25) et/ou le récepteur de lumière (26) est/sont disposé(s) dans la partie inférieure du support (21, 22) correspondant et est/sont disposé(s), dans la deuxième position relative du support (21, 22) correspondant, au-dessus de l'ouverture/des ouvertures frontale(s) (13, 14) du rail de guidage.

8. Presse plieuse selon la revendication 1 ou selon l'une des revendications 3 à 7, **caractérisée en ce que** le premier porte-outil (11) comprend un dispositif de serrage (7) pour la fixation d'un ou plusieurs outils de pliage (8) insérés dans le rail de guidage, dans lequel le dispositif de serrage (7) peut être actionné entre un état de serrage et un état desserré et **en ce que** le dispositif de serrage (7) peut être actionné par le dispositif de commande (9) et/ou l'état du dispositif de serrage (7) peut être lu par le dispositif de commande (9).

9. Presse plieuse selon l'une des revendications précédentes, **caractérisée en ce que** la presse plieuse (10) comprend, en tant que deuxième dispositif de sécurité, une protection (5), plus particulièrement une porte ou une fenêtre, qui est mobile entre une position fermée dans laquelle l'accès latéral à l'intérieur de la presse plieuse (10) est bloqué ou rendu difficile, et une position ouverte.

10. Presse plieuse selon la revendication 9, **caractérisée en ce que** le dispositif de commande (9), dans un mode de fonctionnement, de préférence désactivable, est conçu pour déplacer, par le contrôle du premier et/ou du deuxième entraînement de déplacement (23, 24), le premier support (21) et/ou le deuxième support (22) automatiquement vers la deuxième position relative, lorsque la protection (5) est amenée dans la position ouverte ou se trouve en position ouverte et/ou lorsque le dispositif de serrage (7) est amené dans l'état desserré ou se trouve dans l'état desserré, dans lequel, de préférence le(s) support(s) (21, 22) n'est/ne sont déplacé(s) vers la deuxième position relative que lorsque les deux conditions sont remplies, c'est-à-dire la protection (5) ouverte et le dispositif de serrage (7) desserré.

11. Presse plieuse selon l'une des revendications précédentes, **caractérisée en ce que** le dispositif de commande (9) est conçu, dans un premier mode de fonctionnement, pour déplacer, pour l'exécution d'un mouvement de travail, la première plateforme (1) avec une première vitesse en direction de la deuxième plateforme (2) et pour déplacer, immédiatement avant le début du processus de pliage sur la pièce (19) ou lorsque la distance entre un outil de pliage (8) maintenu par le premier porte-outil (11) et la pièce à usiner (19) passe en dessous d'une valeur prédéterminée, qui est de préférence de 20 mm maximum, de préférence de 10 mm maximum, le premier support (21) et/ou le deuxième support (22) vers la deuxième position relative.

12. Presse plieuse selon l'une des revendications précédentes, **caractérisée en ce que** le dispositif de commande (9) est conçu, dans un deuxième mode de fonctionnement, pour déplacer le premier support (21) et/ou le deuxième support (22) vers la deuxième position relative ou les laisser dans la deuxième position relative avant et/ou pendant que la première plateforme (1) est déplacée avec une deuxième vitesse en direction de la deuxième plateforme (2) pour l'exécution d'un mouvement de travail.

13. Presse plieuse selon la revendication 12, **caractérisée en ce que** la première vitesse est supérieure, de préférence au moins 1,5 fois plus grande, plus particulièrement de préférence au moins 2 fois plus grande que la deuxième vitesse.

14. Presse plieuse selon l'une des revendications précédentes, **caractérisée en ce que** la barrière photoélectrique (27) est constituée d'au moins un faisceau lumineux élargi en un champ lumineux et/ou comprend plusieurs faisceaux lumineux s'étendant parallèlement.

15. Presse plieuse selon l'une des revendications précédentes, **caractérisée en ce que** le récepteur de lumière (26) est un récepteur d'image, de préférence une caméra.

16. Procédé de fonctionnement d'une presse plieuse (10) selon l'une des revendications précédentes, **caractérisé en ce que** le dispositif de commande (9) déplace le premier support (21) et, le cas échéant, le deuxième support (22), vers la deuxième position relative par le contrôle du/des entraînement(s) de déplacement (23, 24).

17. Procédé selon la revendication 16, dans lequel la presse plieuse (10) est conçue selon la revendication 10, **caractérisé en ce que** le dispositif de commande (9), dans un mode de fonctionnement, de préférence désactivable, déplace automatiquement le premier support (21) et/ou le deuxième support (22) vers la deuxième position relative par le contrôle du premier et/ou du deuxième entraînement de déplacement (23, 24), lorsque la protection (5) est amenée en position ouverte ou se trouve en position ouverte et/ou lorsque le dispositif de serrage (7) est amené dans l'état desserré ou se trouve dans l'état desserré.

18. Procédé selon la revendication 16 ou 17, **caractérisé en ce que** le dispositif de commande (9), dans un premier mode de fonctionnement, pour l'exécution d'un mouvement de travail, déplace la première plateforme (1) avec une première vitesse en direction de la deuxième plateforme (2) et déplace le premier support (21) et/ou le deuxième support (22) vers la deuxième position relative immédiatement avant le début du processus de pliage sur la pièce (19) ou lorsque la distance entre un outil de pliage (8) maintenu par le premier porte-outil (11) et la pièce à usiner (19) passe en dessous d'une valeur prédéterminée, qui est de préférence de 20 mm maximum, de préférence de 10mm maximum.

19. Procédé selon l'une des revendications 16 à 18, **caractérisé en ce que** le dispositif de commande (9), dans un deuxième mode de fonctionnement, déplace le premier support (21) et/ou le deuxième support (22) vers la deuxième position relative ou les laisse dans la deuxième position relative avant et/ou pendant que la première plateforme (1) est déplacée avec une deuxième vitesse en direction de la deuxième plateforme (2) pour l'exécution d'un mouvement de travail.

20. Procédé selon la revendication 19, **caractérisé en ce que** la première vitesse est supérieure, de préférence au moins 1,5 fois plus grande, plus particulièrement de préférence au moins 2 fois plus grande que la deuxième vitesse.
